# FASCICULE DE BREVET EUROPEEN

(11) **EP 0 519 295 B1**
(45) Date de publication et mention de la délivrance du brevet: **08.11.1995**
(21) Numéro de dépôt: 92109643.4
(22) Date de dépôt: 09.06.1992
(51) Int. Cl.: B29D 30/10, B29D 30/30, B29D 30/38

(54) **Procédé de fabrication d'un pneumatique, et appareil pour la mise en oeuvre de ce procédé**
Verfahren zum Herstellen eines Reifens und Apparat zur Durchführung des Verfahrens
Method for the production of a tyre and apparatus for the implementation of the method

(30) Priorité: 17.06.1991 FR 9107504
(43) Date de publication de la demande: 23.12.1992
(73) Titulaire: SEDEPRO, F-75015 Paris (FR)
(72) Inventeur: Debroche, Claude, F-63118 Cebazat (FR)
(74) Mandataire: Bauvir, Jacques

(56) Documents cités:
- EP-A- 0 248 301
- US-A- 1 476 325

## Description

La présente invention concerne la fabrication des pneumatiques. Plus particulièrement, elle se rapporte à la mise en place des fils de renforcement du pneumatique, aussi bien pour constituer la carcasse de celui-ci, que pour constituer le renforcement de sommet, encore appelé ceinture. Dans le présent mémoire, on entend par "fabrication d'un pneumatique" une fabrication complète ou encore une fabrication partielle comportant au moins les renforcements fabriqués selon le procédé qui va être exposé, le pneumatique fabriqué ne comportant pas, par exemple, de bande de roulement.

Dans ce domaine technique, on connaît déjà des procédés et machines qui permettent d'intégrer la fabrication des renforcements de pneumatique à l'assemblage du pneumatique lui-même. Cela signifie que, plutôt que de recourir à des produits semi-finis, on réalise un ou les renforcements in situ, au moment où l'on fabrique le pneumatique, et à partir d'un seul fil. On connait par exemple la solution décrite dans le brevet US 4 795 523 qui exige la réalisation d'un grand nombre de crochets de retenue du fil. On connaît aussi la solution décrite dans le brevet US 4 952 259 qui ne permet pas de réaliser des renforcements de carcasse, dans lesquels le fil va d'un talon à l'autre du pneumatique. On connaît encore la solution décrite dans le brevet US 3 894 906 (correspond au préambule de la revendication 1) que l'on ne pourrait pas non plus utiliser pour fabriquer des renforcements de carcasse, et dans laquelle les moyens d'application du fil sur le support sont incapables de fonctionner à un rythme suffisamment rapide pour assurer une productivité satisfaisante.

La présente invention a pour but de proposer un procédé ainsi que des appareils de fabrication d'un renforcement qui soient capables de réaliser aussi bien des nappes de carcasse radiales, que des renforcements de sommet constituant la ceinture triangulée, dans lesquels les fils sont disposés à un angle pouvant descendre jusqu'à environ 15°, qui n'utilise pas de crochets comme moyen de retenue provisoire. Le terme "fil" doit bien entendu être compris dans un sens tout à fait général, englobant un fil unitaire proprement dit, ou un câble ou un assemblage équivalent, et ceci, quelle que soit la matière constituant le fil.

Selon l'invention, le procédé de fabrication d'un pneumatique construit progressivement sur un support en empilant les différents constituants dans l'ordre et à la place requise par l'architecture de pneumatique, dans lequel les renforts en matériau approprié, par exemple en fil textile, naturel ou synthétique, en fil métallique, fibre de verre ou autre, ou fil mixte, sont constitués en avançant par dessus le support une longueur déterminée de fil constituant un tronçon de fil jusqu'à ce que au moins la partie centrale dudit tronçon soit en regard de sa position finale sur le support, est caractérisé en ce que ledit tronçon est plaqué sur le support par l'action de deux rabatteurs disposés de part et d'autre du support, percutant le tronçon de fil du côté de celui-ci opposé au support.

La suite de la description décrit et illustre par les dessins joints trois appareils de fabrication d'un renfort pour pneumatique appliquant ce procédé, les deux premiers à la réalisation de renforcements de carcasse en rayonne, le troisième à la réalisation de renforcements de sommet en acier. Cela permet de bien comprendre tous les aspects de cette invention.

Selon l'invention, ces appareils ont comme caractéristiques communes de comporter un noyau rigide démontable définissant la forme de la surface intérieure du pneumatique, sur lequel on construit progressivement le pneumatique en empilant les différents constituants dans l'ordre et à la place requise par l'architecture finale dudit pneumatique, de comporter un ensemble qui permet l'appel de fil et le prélèvement d'un tronçon de longueur déterminée, qui permet l'insertion dudit tronçon dans un dispositif de présentation de ce tronçon au dessus du noyau, ledit dispositif de présentation disposant la partie centrale au moins dudit tronçon dans un plan formant l'angle voulu par rapport au noyau, juste en regard de sa place finale sur le noyau, et de comporter deux rabatteurs disposés de part et d'autre du noyau, animés chacun d'un mouvement cyclique qui aborde le noyau par le haut de celui-ci et descend en direction de l'axe de rotation du noyau, entrant en contact avec le tronçon de fil puis se rapprochant du noyau au cours de la trajectoire descendante et appliquant le tronçon de fil sur le noyau à l'endroit voulu.

Les figures suivantes permettent de bien faire comprendre le fonctionnement des appareils conçus selon les principes de l'invention.

La figure 1 est une vue en élévation de l'appareil de fabrication d'un renfort de carcasse, dans laquelle le noyau apparaît en coupe radiale.

Les figures 1A, 1B et 1C sont des grossissements de parties localisées sur la figure 1.

La figure 2 est une vue de dessus de l'appareil de la figure 1.

La figure 3 est une vue de côté du même appareil.

La figure 4 illustre un détail de réalisation d'un organe du même appareil.

La figure 5 est une vue de côté du deuxième appareil.

La figure 6 montre une élévation du deuxième appareil permettant la fabrication d'un renfort de carcasse.

La figure 7 est une vue de côté montrant un troisième appareil de fabrication d'un renfort de sommet.

La figure 8 est une vue de dessus de cet appareil.

La figure 9 est une élévation de côté du même appareil.

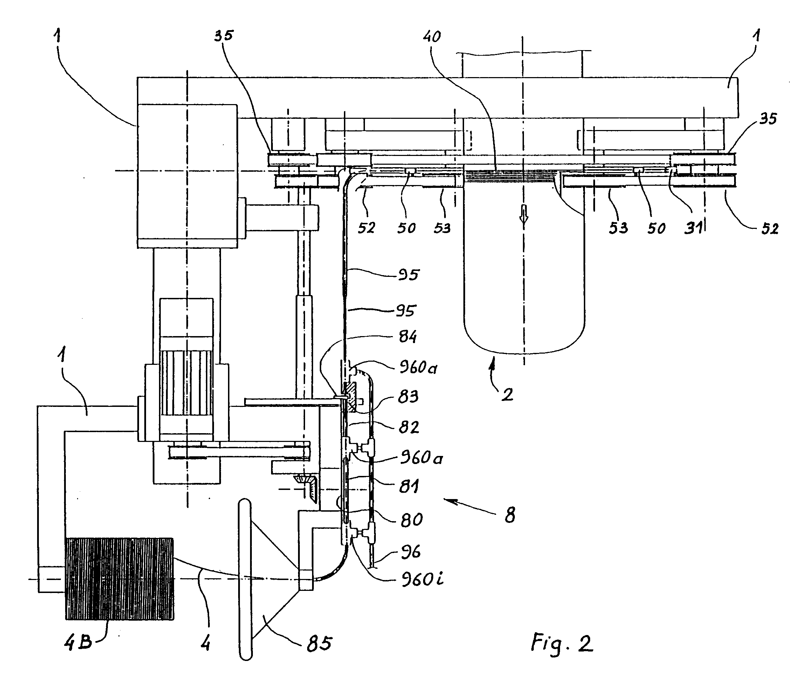

Notons d'abord que l'ensemble qui permet l'appel de fil et le prélèvement d'un tronçon 40 fonctionne selon le même principe et est identifié par des références débutant par le chiffre 8 sur toutes les figures. Lorsqu'il est utilisé avec du fil textile, il est utilisé avec une propulsion pneumatique décrite en détail plus bas, identifiée sur les figures 2, 4, 5 et 6 par des références débutant par le chiffre 9.

Lorsqu'il est utilisé avec du fil métallique, il n'est pas nécessaire d'utiliser de propulsion pneumatique. Par contre, il convient que le fil métallique ait subi un traitement préalable lui permettant de bien adhérer au caoutchouc cru. On trouve un exemple d'un tel traitement dans le brevet US 4 592 259.

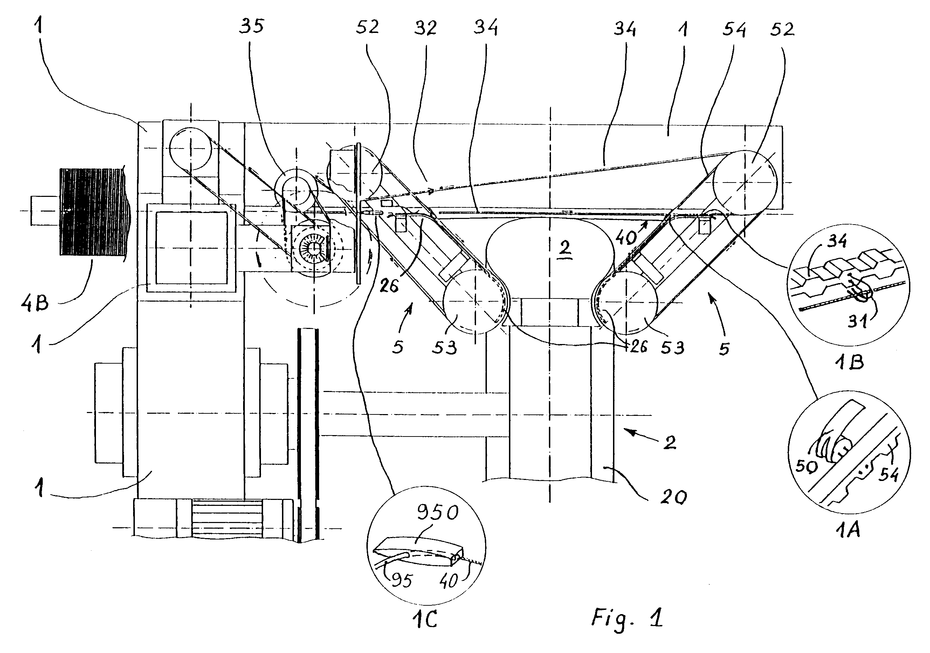

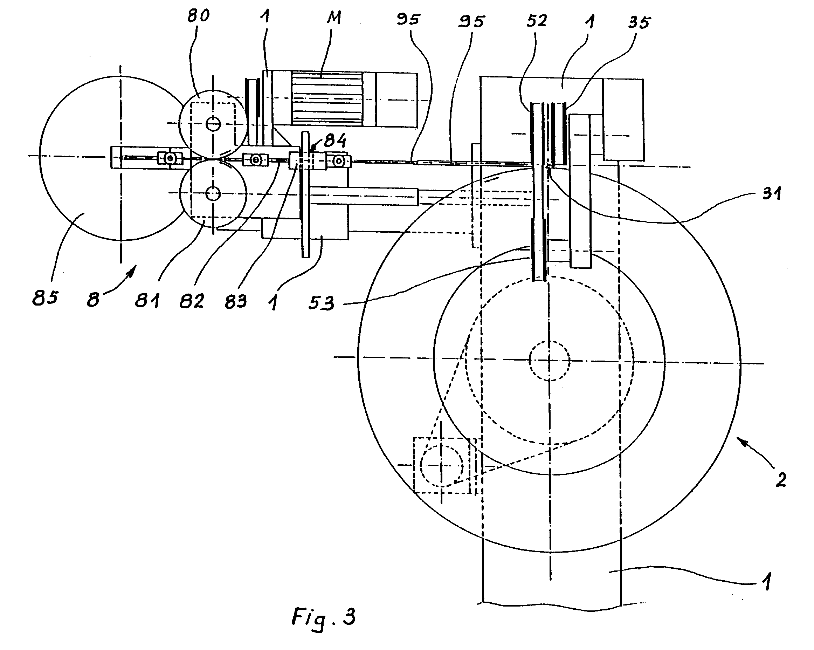

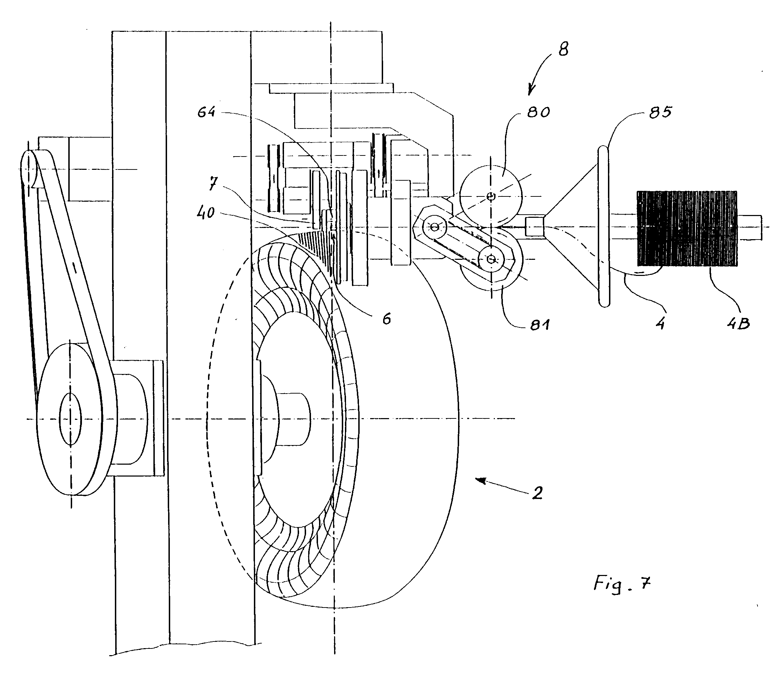

Deux types de rabatteurs sont décrits ci-après. Aux figures 1 à 6, on voit un rabatteur constitué par un taquet 50 monté sur une courroie 54 engagée sur deux poulies 52, 53, permettant d'approcher le noyau plus particulièrement dans la zone des talons du futur pneumatique . Aux figures 7, 8 et 9, on voit un rabatteur rotatif permettant d'approcher le noyau plus particulièrement dans la zone de l'épaule du futur pneumatique. Le mouvement circulaire qu'il décrit est tangent à la zone épaule.

Le bâti de la machine illustré aux figures 1 à 3 apparaît partiellement et est désigné par la référence 1. Le noyau 2 est recouvert d'une couche de caoutchouc sur laquelle le fil 4 de renforcement va être déposé pour constituer une carcasse radiale. La machine est alimentée en fil 4 par une bobine 4B.

Pour en assurer le dévidage, le fil 4 est pincé entre deux galets 80, 81 couverts d'un revêtement anti-dérapant. Le galet 81 est motorisé. On peut donc connaître en continu la mesure précise de la quantité de fil appelée par la connaissance du nombre de tours de la commande et de la démultiplication installée. N'importe quel type de fil peut être appelé et mesuré de cette manière.

L'ensemble des mouvements de la machine, sauf la rotation du noyau 2, est commandé de façon synchrone par le moteur M, à vitesse angulaire connue, alors que la rotation du noyau 2 est commandée par un autre moteur, non représenté, dont la vitesse est liée à celle du moteur M. Le noyau 2 est entraîné en rotation par un autre moteur, à une vitesse proportionnelle à celle du moteur M, et dépendant en outre du pas de pose des tronçons 40 de fil 4.

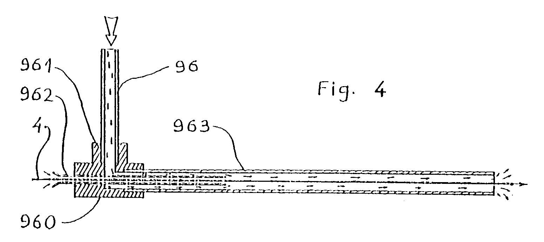

Les fils textiles naturels ou synthétiques doivent impérativement être maintenus bien tendus par une propulsion pneumatique. Le principe de cette propulsion pneumatique est illustré à la figure 4. La propulsion pneumatique est obtenue à l'intérieur d'un té 960 ayant une branche centrale 961 et deux branches alignées 962 et 963. La branche centrale 961 reçoit une canalisation 96 d'amenée d'air comprimé. On voit que l'air comprimé est chassé par la branche 963. On introduit le fil 4 par la branche 962 et, dès qu'il quitte la branche 962, l'air comprimé tend à expulser le fil 4 en permanence hors de ladite branche 963.

On voit sur la fig. 2 la canalisation 96 qui amène l'air comprimé à trois endroits sur le chemin du fil 4. Tout d'abord, en amont des galets 80, 81 de dévidage, une propulsion pneumatique inverse 960i tend en permanence à retirer le fil 4 en arrière afin qu'en cas d'arrêt ou de marche arrière de la machine pendant par exemple des phases de réglage au démarrage, le fil 4 reste toujours tendu, et ne s'accumule pas entre la trompette 85 de réception du fil 4 et les galets de dévidage 80, 81. En aval de ceux-ci, on trouve une première propulsion en sens avant 960a, implantée au début du tuyau 82 amenant le fil 4 vers le canon 83. Enfin, une seconde propulsion en sens avant 960a est implantée au début de la tubulure 95 qui conduit le fil vers le dispositif de présentation au noyau. Reprenant le cheminement du fil 4 plus en arrière, celui-ci a donc été introduit dans une tubulure 82, dont l'extrémité renforcée constitue un canon 83 supportant le fil 4 lorsqu'il est tranché par le couteau rotatif 84. Les tronçons 40 du fil 4 à poser sur le noyau pour constituer le renforcement de carcasse sont ainsi individualisés.

Chaque tronçon 40 de fil 4 ainsi isolé est ensuite soumis à l'action de l'ensemble de présentation des tronçons 40 de fils, qui comporte deux pinces 31, 32, mobiles par rapport au noyau 2, montées sur une courroie porte-pinces 34, elle-même engagée sur deux poulies 35. Chaque pince 31, 32 saisit un tronçon 40, en aval du dispositif 8 d'appel de fil et de prélèvement de tronçons, et l'entraîne linéairement par dessus le noyau 2 et au-delà de celui-ci.

Les rabatteurs sont désignés en général, par la référence 5. Un rabatteur comporte un taquet 50, fixé sur une courroie de rabatteur 54 engagée sur deux poulies 52 et 53. Le taquet 50 est conformé, et fixé sur la courroie de rabatteur 54 de façon à être perpendiculaire au sens de son mouvement. Il agit à la manière d'un doigt autour duquel le fil 4 vient s'enrouler partiellement, comme on le verra mieux dans la suite.

La courroie porte-pince 34 avec ses pinces 31, 32, et les rabatteurs 5 sont tous solidaires les uns des autres, et éventuellement mobiles par rapport au noyau 2 afin de régler l'angle sous lequel on souhaite poser les fils de renforcement. Dans la mise en oeuvre de l'invention illustrant cette description, la machine est conçue pour ne déposer que des fils à 90° formant la nappe de carcasse radiale.

La présentation d'un tronçon de fil se fait grâce à l'intervention d'une pince 31 ou 32. Les deux pinces 31, 32 interviennent successivement, une seule d'entre elles servant à la présentation d'un tronçon de fil 4 à un moment donné. Chaque pince 31 ou 32 est naturellement fermée. Pour saisir le fil 4, ses deux mors sont écartés en passant de part et d'autre de l'extrémité 950 de la tubulure 95 (voir figure 1C). Dès qu'une pince quitte cette extrémité 950 (vers la droite à la figure 1C), elle se referme sur le tronçon 40 du fil qui apparaît à la sortie de l'extrémité 950.

Les pinces 31, 32 sont écartées sur la courroie 34 d'une distance légèrement supérieure à la longueur du plus long des tronçons 40 que l'on veut poser, donc à la longueur d'un fil de carcasse dans le pneumatique. Dès lors, dès qu'une pince a lâché le fil sous l'action des rabatteurs dont l'intervention est expliquée ci-dessous, la suivante, qui a déjà saisi le fil, est prête à l'entraîner à nouveau en regard du noyau. La longueur de la courroie 34 est choisie en conséquence.

Par une démultiplication adéquate, la pince 31 ou 32 entraîne le fil 4 à une vitesse de 10 % environ supérieure à celle imposée par les galets 80, 81. Lorsque le fil 4 apparaît à l'extrémité 950 de la tubulure 95, le couteau 84 n'a pas encore libéré le futur tronçon 40 individuel de fil. Aucun glissement du fil 4 n'est possible par rapport aux galets 80, 81. A ce moment précis, le fil 4 est saisi par la pince 31 (ou 32 alternativement) qui glisse légèrement sur celui-ci. Puis le couteau 84 sectionne le fil 4 et la pince 31 ou 32 entraîne le tronçon 40 qui vient d'être individualisé.

Les poulies 53 des rabatteurs 5 sont disposées à proximité immédiate du bas du noyau 2. Leur diamètre est choisi de préférence pour correspondre sensiblement au rayon de courbure du noyau, dans un plan méridien, au niveau du talon du futur pneumatique.

Les poulies 52 sont disposées à hauteur du sommet du noyau 2, ou bien plus haut encore. Les poulies 52 et 53 portent une courroie 54 sur laquelle sont montés deux taquets 50 et 51 intervenant successivement, c'est-à-dire l'un sur un tronçon et le suivant sur le tronçon suivant. Les poulies 52 et 53 sont orientées radialement, la poulie 52 étant en outre placée par rapport au noyau de façon à ce que le taquet 50 ou 51 puisse percuter le tronçon de fil 40 entre l'aplomb du noyau 2 et le bord du tronçon 40, de préférence assez près de l'extrémité du tronçon 40. Lorsque la cadence de pose est élevée, le taquet 50 entraîne le fil radialement vers le bas suffisamment vite pour qu'il y ait glissement du fil sur le taquet 50, le tronçon 40 étant immobilisé par adhésion en son milieu sur le noyau 2 revêtu d'une couche de caoutchouc. De préférence, on dispose, de part et d'autre du noyau, des pistes de frottement 26, pour soutenir légèrement le fil lorsqu'il est repris par le taquet 50. Par son mouvement rapide, le taquet 50 entraîne donc le fil radialement vers le bas et le plaque sur le noyau 2, où il se colle partout sur la couche de caoutchouc sans présenter d'ondulation ou autre irrégularité de trajectoire. Pour bien centrer le tronçon 40 sur le taquet 50, celui-ci comporte une petite gorge qui apparaît à la figure 1A.

On vient de décrire le cycle élémentaire de la machine. La répétition du même cycle autant de fois qu'il y a de tronçons 40 de fil permet la fabrication du renforcement dit de carcasse. Il reste à assurer un ancrage solide de tous ces fils pour former le talon du pneumatique.

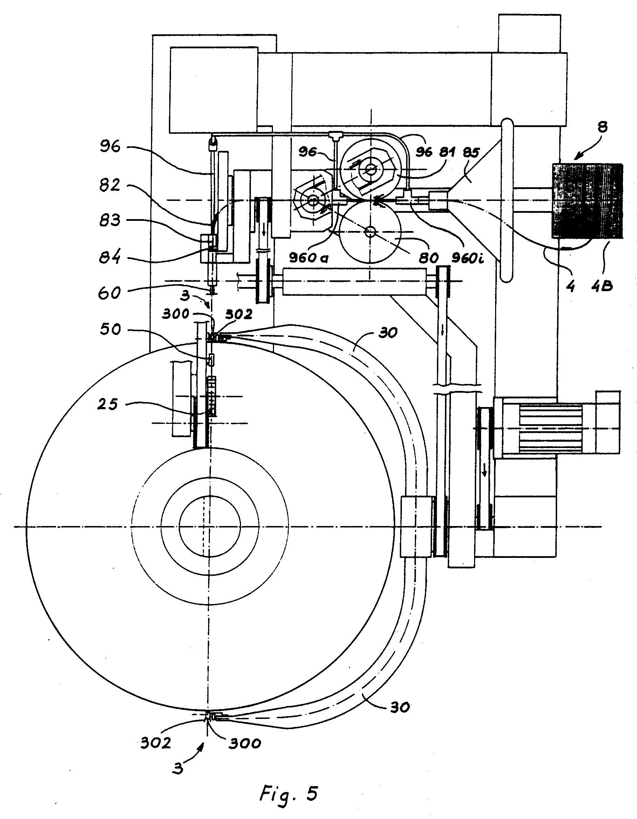

On peut ancrer un renforcement de carcasse ainsi constitué à une tringle, en ayant pris soin que chaque tronçon ait une longueur suffisante pour constituer un retournement autour de la tringle. Ce retournement est effectué par tout moyen adéquat comme bien connu par l'homme du métier par exemple une vessie gonflable de retournement. Ou bien on peut constituer un talon de pneumatique du genre de celui décrit dans le brevet US 3 072 171 aux figures 4 et 5, en bobinant circonférentiellement d'autres fils.

Afin de pouvoir insérer et extraire le noyau 2, l'axe des poulies 53 pivote autour de l'axe des poulies 52, de façon à augmenter autant que souhaité l'écart entre les poulies 53, tout en maintenant les courroies 54 tendues sur leurs poulies 52 et 53 respectives.

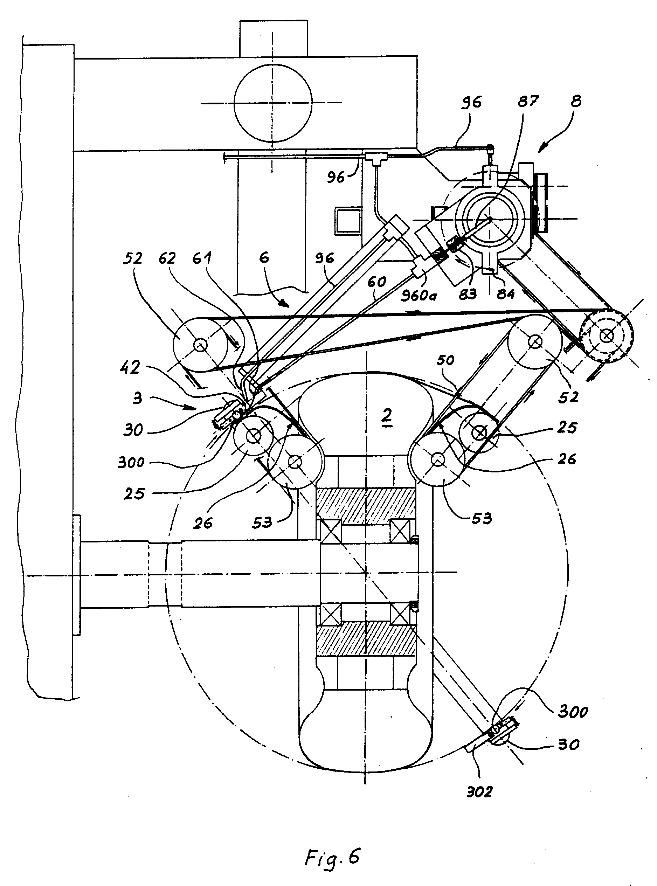

Les figures 5 et 6 illustrent une seconde machine permettant elle aussi la fabrication de renforts de carcasse radiale, dans lesquels les fils se disposent sur le noyau 2 dans un plan méridien.

Pour en assurer le dévidage, le fil 4 est là aussi pincé entre deux galets 80, 81 couverts d'un revêtement anti-dérapant. Les galets 80, 81 sont motorisés, tous deux à la même vitesse, ce qui permet l'appel de fil 4 et la mesure précise de la quantité appelée, comme expliqué ci-dessus.

Le fil 4 est ensuite introduit dans un tuyau 82, dont l'extrémité renforcée constitue un canon 83 supportant le fil 4 lorsqu'il est tranché par le couteau rotatif 84.

On remarque qu'afin de clarifier les dessins, la figure 5 comporte un rabattement partiel. Le couteau rotatif 84, le canon 83, la tubulure 60 du dispositif de présentation 6 y sont représentés dans le plan de la feuille, alors que leur position réelle est celle apparaissant à la figure 6.

Chaque tronçon 40 de fil 4 ainsi individualisé est ensuite soumis à l'action d'une tête de pose 3 en rotation dans un plan méridien, à un rayon juste supérieur au rayon maximal du noyau 2. Le couteau rotatif 84, intervient donc en aval des galets de dévidage 80, 81 et en amont d'un dispositif de présentation 6 dont le rôle est d'orienter le fil 4, plus précisément chaque tronçon 40 de fil 4, dans un plan méridien et de le présenter correctement à la tête de pose 3 pour que celle-ci puisse le poser à la fois sur le noyau 2 et sur des galets intermédiaires 25, disposés de part et d'autre du noyau 2, centrés par rapport au plan contenant la trajectoire de la tête de pose 3.

Un galet 300, monté à l'extrémité du bras 30, est l'organe d'application du fil 4 sur le noyau 2. Le rôle du dispositif de présentation 6 est donc d'amener du fil 4 bien centré par rapport au galet, de l'amener entre le galet 300 et le galet intermédiaire 25 et également de contribuer à maintenir le fil 4 centré par rapport au galet 300 pendant que celui-ci applique le fil 4 sur le noyau 2.

Bien entendu, le champ d'action de la tête de pose 3 doit rester libre. Donc il subsiste l'espace nécessaire au déplacement de la tête de pose 3 entre le dispositif de présentation 6 et le galet intermédiaire 25.

Pour amener l'extrémité du tronçon 40 de fil 4 devant le galet 300 de façon à la fois précise et fiable, une goulotte 302 est fixée au bras 30 de la tête de pose 3. Elle est formée de façon à obtenir une surface réceptrice ayant l'allure d'un V.

Cette goulotte 302 peut réceptionner l'extrémité 42 du tronçon 40 du fil 4, ce qui permet de tolérer une grande marge d'imprécision pour la position de celle-ci. On oriente l'extrémité 61 du dispositif de présentation 6 (en réalité une simple tubulure 60 dans laquelle le fil 4 est engagé) pour que l'extrémité 42 du fil 4 tombe plutôt trop en avant par rapport au galet 300, afin d'être certain qu'elle ne tombe jamais par dessus ce galet 300, ou dans la moitié supérieure de celui-ci. L'extrémité de cette goulotte forme une boutonnière par laquelle le fil pénètre.

Contrairement aux fils métalliques, les fils textiles doivent impérativement être maintenus bien tendus par une propulsion pneumatique parce qu'ils ne présentent aucune résistance à la compression. On voit la canalisation 96 qui amène l'air comprimé à quatre endroits sur le chemin du fil 4. Tout d'abord, en amont des galets 80, 81 de dévidage, une propulsion pneumatique inverse 960i tend en permanence à retirer le fil 4 en arrière afin que, en cas d'arrêt ou de marche arrière de la machine pendant par exemple des phases de réglage au démarrage, le fil 4 reste toujours tendu, et ne s'accumule pas entre la trompette 85 de réception du fil 4 et les galets de dévidage 80, 81. En aval de ceux-ci, on trouve une première propulsion en sens avant 960a, implantée au début du tuyau 82 amenant le fil 4 vers le canon 83. Il est souhaitable de créer des pertes de charge par des trous percés au travers du tuyau 82, afin de parvenir à un bon effort d'entraînement du fil 4. Une seconde propulsion en sens avant 960a est implantée au début de la tubulure 60, laquelle comporte aussi des trous créant des pertes de charge environ au milieu de celle-ci. Finalement, une buse 62 envoie un jet d'air juste au devant du canal de sortie 61 du dispositif de présentation 6.

Ce canal de sortie 61 est implanté à l'extrémité de la tubulure 60 et est légèrement recourbé vers le noyau 2, pour que l'extrémité 42 du fil 4 vienne frapper le fond de la goulotte 302 avec un angle d'incidence d'environ 40°. De la sorte, ladite extrémité 42 se présente toujours correctement entre le galet intermédiaire 25 et le galet 300.

Le galet 300 applique chacun des tronçons 40 de fil sur chacun des galets intermédiaires 25, et sur le sommet du noyau 2. La rotation des galets intermédiaires 25 est suffisamment freinée pour qu'ils ne tournent pas lors de l'application du fil sur ceux-ci. En outre, la surface de ceux-ci et le fil 4 ont des propriétés d'auto-adhésion suffisantes pour que le fil adhère sur les galets intermédiaires 25 lorsqu'il y est déposé, mais suffisamment faibles pour qu'il soit facilement libéré dans la suite, la rotation possible des galets intermédiaires facilitant ladite libération. Par exemple, les galets intermédiaires 25 sont revêtus d'une couche de caoutchouc vulcanisé. Les galets intermédiaires 25 sont écartés l'un de l'autre d'une distance qui est fonction de la longueur des tronçons 40 à poser, et placés de telle façon qu'ils soient à l'intérieur de la trajectoire de la tête de pose 3, qui dans le cas présent forme un cercle.

Par la suite, l'intervention des taquets 50 se produit exactement comme expliqué plus haut et le cycle peut recommencer. Là encore, de préférence, on dispose une piste de frottement 26 de part et d'autre du noyau 2, comme cela apparaît à la figure 6.

La troisième variante de réalisation est spécifiquement conçue pour poser du fil métallique pour constituer un renfort de sommet. Le dispositif de présentation 6 de cette variante est constitué par une gorge linéaire, disposée perpendiculairement à un rayon inclus dans le plan médian, joignant l'axe de rotation du noyau 2 et cette gorge linéaire, et formant ledit angle voulu par rapport à ce plan médian, la gorge étant ouverte vers le noyau 2. Dans le cas illustré, l'appareil est conçu spécifiquement pour réaliser des renforts de sommet, à angle variant entre 15° et 90°.

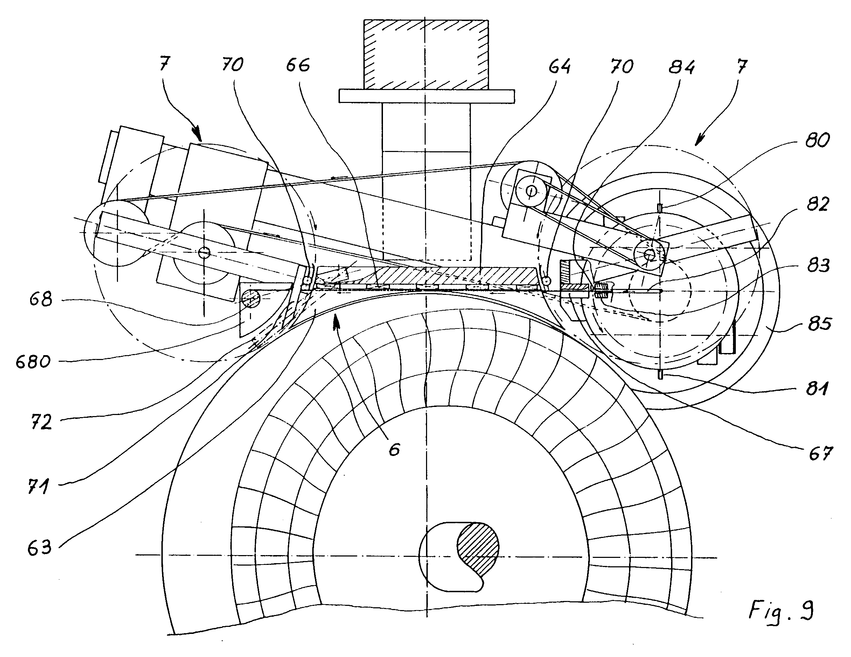

A la figure 7, on voit que l'appel d'un fil métallique 4 est effectué par un ensemble à galets 80, 81 tout à fait similaire à ce qui a été décrit plus haut. L'entraînement des galets 80, 81 permet la mesure permanente de la longueur du fil 4 appelé. Chaque tronçon 40 de fil est individualisé par un couteau 84 rotatif passant au ras d'un canon 83 sous lequel le fil est propulsé par les galets 80, 81. A la figure 9, on voit que le dispositif de présentation 6 comporte un premier canal 67, ouvert vers le noyau 2 (ayant des parois sur les côtés transversaux et sur le dessus), puis une gorge 64 formant un canal linéaire, disposé en regard de la place finale du tronçon 40 sur le noyau 2 et ouverte vers le noyau. La gorge 64 est formée par deux flasques 63 la délimitant transversalement, et, sur le dessus, par une rampe magnétique, dont on aperçoit les petits aimants 66 placés par dessus.

Une chambre réceptionne l'extrémité du tronçon 40. Cette chambre comporte essentiellement un support d'extrémité 68 au dessus duquel le tronçon vient s'appuyer, et deux flasques 680 délimitant la trajectoire ultérieure du tronçon, tout comme les flasques 63, à savoir une trajectoire plane radiale. Entre le canon 83 et le premier canal 67 subsiste l'espace juste nécessaire au passage du couteau 84. Entre ce premier canal 67 et la gorge 64 subsiste l'espace juste nécessaire au passage du taquet 70 de l'un des rabatteurs 7. Entre la gorge 64 et la chambre contenant le support 68 d'extrémité, subsiste l'espace nécessaire au passage du taquet 70 de l'autre des rabatteurs 7.

Le fil 4, en acier magnétique, est retenu au fond de la gorge 64 par attraction magnétique, grâce aux petits aimants 66 placés par dessus cette rampe, elle-même réalisée en matériau amagnétique. Ces aimants développent sur le fil 4 une force d'attraction suffisante pour le saisir en vol, en sortie du canon 83, et suffisamment faible pour que le fil 4 puisse être détaché facilement lorsqu'il est percuté par les rabatteurs 7.

Le canon 67, la gorge 64 et la chambre d'extrémité sont orientés par rapport au noyau 2 de façon à ce que leur projection radiale sur le noyau 2 forme l'angle voulu pour le fil de renforcement de sommet, soit environ 25° dans l'exemple considéré. Le prélèvement d'un tronçon 40 de fil 4 est effectué comme déjà décrit par un couteau 84 qui sectionne le fil 4 au ras du canon 83 lorsqu'une longueur prédéterminée a été introduite dans la rampe 64. Chaque rabatteur 7 est constitué par un taquet 70 similaire au taquet 50 du rabatteur de la variante précédente, et décrit un mouvement circulaire approximativement tangent au noyau 2.

Les cercles discontinus visualisent, à la figure 9, la trajectoire des taquets 70, et le cercle en trait d'axe, sur la droite de la figure 9, visualise la trajectoire du couteau 84. Le couteau 84 est fixé sur un disque qui forme sur le dessin un cercle de diamètre légèrement supérieur au diamètre du cercle en traits d'axe.

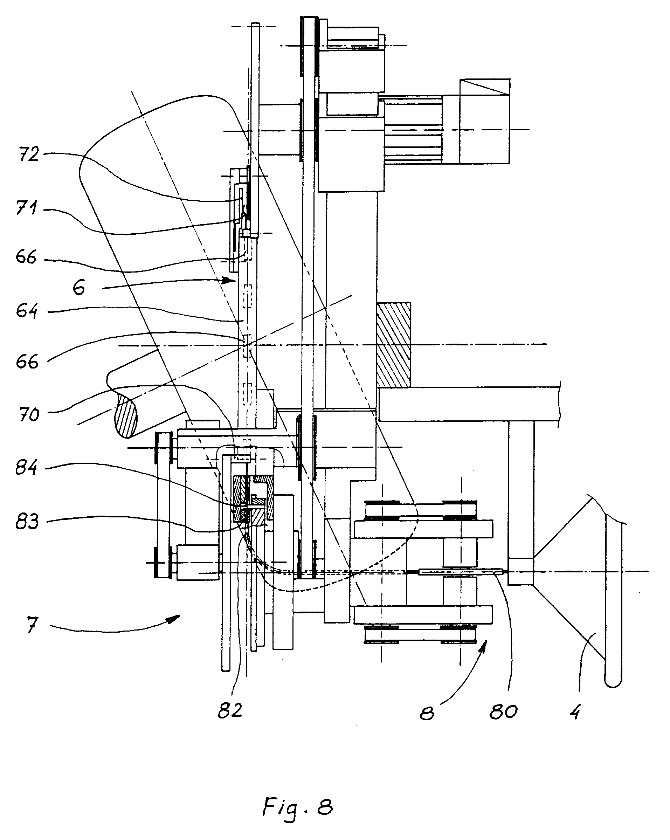

De façon avantageuse, le taquet 70 du côté gauche sur la figure 9, c'est-à-dire celui agissant sur l'avant du tronçon 40, par référence à son sens d'introduction dans le dispositif de présentation, agit sur le tronçon 40 un peu après l'autre taquet. En outre, pour améliorer la projection du tronçon, ce même rabatteur (côté gauche à la figure 9, côté droit à la figure 8) est pourvu d'une pince en V 71 entre les branches de laquelle le fil peut se glisser. Cette pince forme un V dans le plan de la figure 8, où la référence 71 pointe sur l'une des branches du V. Ce V est refermé par l'action de la came 72 immobile, juste après avoir saisi le fil. La came n'agit que sur un côté de la pince 71, juste assez pour maintenir légèrement le fil, mais la pince 71 peut glisser sur le fil au cours du mouvement de rabattement car celui-ci est déjà collé sur le noyau 2 à l'autre côté et au centre du noyau, par l'intervention légèrement antérieure de l'autre rabatteur. Cette disposition assure que le fil se pose de façon bien droite.

## Revendications

1. Procédé de fabrication d'un pneumatique construit progressivement sur un support en empilant les différents constituants dans l'ordre et à la place requise par l'architecture de pneumatique, dans lequel les renforts en fil (4) en matériau approprié sont constitués en avançant par dessus le support, une longueur déterminée de fil constituant un tronçon (40) de fil jusqu'à ce que au moins la partie centrale dudit tronçon soit en regard de sa position finale sur le support, caractérisé en ce que ledit tronçon est plaqué sur le support par l'action de deux rabatteurs disposés de part et d'autre du support, percutant le tronçon de fil du côté de celui-ci opposé au support.

2. Appareil de fabrication d'un pneumatique, comportant un noyau (2) rigide démontable définissant la forme de la surface intérieure du pneumatique, sur lequel on construit progressivement le pneumatique en empilant les différents constituants dans l'ordre et à la place requise par l'architecture finale dudit pneumatique, comportant un ensemble (8) qui permet l'appel du fil (4) et le prélèvement d'un tronçon (40) de fil de longueur déterminée, qui permet et l'insertion du tronçon (40) dans un dispositif de présentation (6) de ce tronçon (40) au dessus du noyau (2), caractérisé en ce que ledit dispositif de présentation du tronçon (40) comporte des moyens alignant ledit tronçon sensiblement perpendiculairement à un rayon au-dessus du noyau (2), selon l'angle voulu par rapport au noyau (2) et la partie centrale au moins dudit tronçon (40) étant substantiellement en regard de sa place finale sur le noyau (2), et en ce que l'appareil comporte deux rabatteurs (5 ou 7) animés d'un mouvement cyclique de part et d'autre du noyau 2), abordant le noyau (2) par le haut de celui-ci, en descendant en direction de l'axe de rotation du noyau (2), entrant en contact avec le tronçon (40) de fil puis se rapprochant du noyau (2) au cours de sa trajectoire descendante, et appliquant le tronçon de fil sur le noyau (2) à l'endroit voulu.

3. Appareil selon la revendication 2, caractérisé en ce que le dispositif de présentation (6) comporte au moins une pince (31, 32) mobile par rapport au noyau (2), la pince (31 ou 32) saisissant le fil (4) en aval de l'ensemble (8) d'appel et de prélèvement, et entraînant chaque tronçon (40) linéairement par dessus le noyau (2) et au-delà de celui-ci, la pince se déplaçant de façon à ce que le tronçon (40) entraîné forme l'angle voulu par rapport au noyau.

4. Appareil selon la revendication 3, caractérisé en ce que les pinces (31, 32) sont montées sur une courroie (34) porte-pinces, engagée sur deux poulies (35), la courroie (34) porte-pinces et lesdites poulies (35) étant orientées parallèlement à un plan formant ledit angle voulu par rapport au noyau.

5. Appareil selon l'une des revendications 3 ou 4, caractérisé en ce que ledit angle vaut 90°.

6. Appareil selon la revendication 2, caractérisé en ce que le dispositif de présentation (6) est constitué par une gorge linéaire, disposée perpendiculairement à un rayon inclus dans le plan médian, joignant l'axe de rotation du noyau (2) et cette gorge linéaire, et formant ledit angle voulu par rapport à ce plan médian, la gorge étant ouverte vers le noyau (2).

7. Appareil selon la revendication 6, pour fil (4) métallique, caractérisé en ce que la gorge comporte, du côté opposé à son ouverture vers le noyau, une rampe magnétique (64) linéaire disposée en regard de la place finale du fil sur le noyau, chaque tronçon (40) de fil (4) étant introduit dans cette gorge, et retenu au fond de celle-ci par attraction magnétique.

8. Appareil selon l'une des revendication 6 ou 7, caractérisé en ce que ledit angle est compris entre 15° et 90°.

9. Appareil selon la revendication 2, caractérisé en ce que deux galets de réception (25) sont disposés de part et d'autre du noyau (2), centrés par rapport au plan contenant la trajectoire d'une tête de pose (3), et en ce que le dispositif de présentation (6) est constitué par une tubulure (60) dont l'extrémité amène le tronçon (40) sur un galet de réception (25), et devant la tête de pose (3), qui saisit chaque tronçon (40) de fil et l'applique sur le noyau (2) et sur les galets intermédiaires (25), chaque rabatteur (5) intervenant entre le noyau et l'un des galets intermédiaires (25).

10. Appareil selon l'une des revendications 6 à 8, caractérisé en ce que le rabatteur décrit un mouvement circulaire tangent à la zone épaule du futur pneumatique.

11. Appareil selon l'une des revendications 2 à 5 ou 9, caractérisé en ce que le rabatteur est monté sur une courroie (54) de rabatteurs engagée sur deux poulies (52, 53) dont l'une est située au niveau des talons du futur pneumatique, et l'autre est située radialement au niveau du sommet du noyau, ou au dessus.

12. Appareil selon l'une des revendications 10 ou 11, caractérisé en ce que le rabatteur est constitué par un taquet (50) orienté perpendiculairement au sens de son mouvement.

13. Appareil selon la revendication 12, caractérisé en ce que l'un des rabatteurs comporte une pince (71) saisissant le fil, mais pouvant glisser le long de celui-ci, le rabatteur ainsi équipé agissant sur le fil après l'autre rabatteur.

14. Appareil selon l'une des revendications 2 à 13, caractérisé en ce que l'appel du fil est effectué par deux galets (80, 81) entre lesquels le fil (4) est pincé, l'un des galets au moins étant entraîné en rotation à vitesse angulaire connue de sorte que la mesure permanente de la longueur de fil appelée est réalisée en continu, le fil (4) étant ensuite introduit dans un canon (83), le prélèvement étant effectué par un couteau (84) en rotation devant ledit canon (83).

## Claims

1. A method of manufacturing a tyre built progressively on a support by stacking the various components in order, at the place required by the architecture of the tyre, in which the reinforcements of cord (4) of suitable material are formed by advancing over the support a given length of cord constituting a length (40) of cord until at least the central part of said length is opposite its final position on the support, characterised in that said length is applied against the support by the action of two folding means arranged on opposite sides of the support, striking the length of cord on the side thereof opposite the support.

2. An apparatus for the manufacture of a tyre, comprising a demountable rigid core (2) defining the shape of the inner surface of the tyre, on which the tyre is progressively built by stacking the various components in order and at the place required by the final architecture of said tyre, comprising an assembly (8) which permits the feeding of the cord (4) and the removal of a length (40) of cord of given size, which permits the insertion of the length (40) in a device (6) for presenting this length (40) above the core (2), characterised in that said device for presenting the length (40) has means which align said length substantially perpendicular to a radius above the core (2) in accordance with the angle desired with respect to the core (2) and the central part at least of said length (40) being substantially opposite its final place on the core (2), and in that the apparatus comprises two folding means (5 or 7) moved in a cyclic movement on both sides of the core (2), approaching the core (2) from the top thereof, descending in the direction of the axis of rotation of the core (2), coming into contact with the length (40) of cord, and then moving towards the core (2) during the downward trajectory and applying the length of cord against the core (2) at the desired place.

3. An apparatus according to Claim 2, characterised in that the presentation device (6) has at least one clamp (31, 32) which is movable with respect to the core (2), the clamp (31 or 32) grasping the cord (4) downstream of the feeding and removal assembly (8) and driving each length (40) linearly above the core (2) and beyond it, the clamp moving in such a manner that the driven length (40) forms the desired angle with respect to the core.

4. An apparatus according to Claim 3, characterised in that the clamps (31, 32) are mounted on a clamp-holder belt (34) which is engaged on two pulleys (35), the clamp-holder belt (34) and said pulleys (35) being oriented parallel to a plane forming said desired angle with respect to the core.

5. An apparatus according to one of Claims 3 or 4, characterised in that said angle is 90°.

6. An apparatus according to Claim 2, characterised in that the presentation device (6) is formed by a linear groove arranged perpendicular to a radius included in the median plane, joining the axis of rotation of the core (2) and this linear groove, and forming said desired angle with respect to said median plane, the groove being open towards the core (2).

7. An apparatus according to Claim 6 for metal wire (4), characterised in that the groove comprises, on the side opposite its opening towards the core, a linear magnetic ramp (64) arranged opposite the final place of the wire on the core, each length (40) of wire (4) being introduced into said groove and held at the bottom thereof by magnetic attraction.

8. An apparatus according to one of Claims 6 or 7, characterised in that said angle is between 15° and 90°.

9. An apparatus according to Claim 2, characterised in that two receiving rollers (25) are arranged on opposite sides of the core (2), centred with respect to the plane containing the path of a laying head (3), and in that the presentation device (6) is formed by a connection piece (60) the end of which conducts the length (40) onto a receiving roller (25) and in front of the laying head (3), which grasps each length (40) of cord and applies it onto the core (2) and onto the intermediate rollers (25), each folding means (5) acting between the core and one of the intermediate rollers (25).

10. An apparatus according to one of Claims 6 to 8, characterised in that the folding means describes a circular movement tangent to the shoulder zone of the future tyre.

11. An apparatus according to one of Claims 2 to 5 or 9, characterised in that the folding means is mounted on a folding means belt (54) which is engaged on two pulleys (52, 53) one of which is located at the level of the beads of the future tyre, while the other is located radially at the level of the top of the core, or above it.

12. An apparatus according to one of Claims 10 or 11, characterised in that the folding means is formed by a tappet (50) which is directed perpendicular to the direction of its movement.

13. An apparatus according to Claim 12, characterised in that one of the folding means comprises a clamp (71) which grasps the cord but can slide along it, the folding means equipped in this manner acting on the cord after the other folding means.

14. An apparatus according to one of Claims 2 to 13, characterised in that the feeding of the cord is effected by two rollers (80, 81) between which the cord (4) is clamped, one of the rollers at least being driven in rotation at known angular speed so that the continuous measurement of the length of cord fed is effected constantly, the cord (4) then being introduced into a barrel (83), the removal being effected by a knife (84) in rotation in front of said barrel (83).

## Patentansprüche

1. Verfahren zur Herstellung eines Reifens, der fortschreitend auf einer Unterlage dadurch aufgebaut wird, daß man die unterschiedlichen Bestandteile in der Reihenfolge und an der Stelle aufschichtet, die durch die Bauart des Reifens gefordert sind, bei dem die Verstärkungen aus Faden (4) aus einem geeigneten Material dadurch gebildet werden, daß man über die Unterlage hinweg eine vorbestimmte Länge des Fadens voranbewegt, der einen Fadenabschnitt (40) bildet, bis mindestens der mittlere Teil des genannten Abschnitts in seiner endgültigen Lage auf der Unterlage gegenüberliegt, dadurch **gekennzeichnet**, daß der genannte Abschnitt auf die Unterlage durch Wirkung zweier Herumlegeeinrichtungen aufgetragen wird, die beiderseits der Unterlage angeordnet sind, indem man gegen den Fadenabschnitt auf dessen Seite anschlägt, die der Unterlage entgegengesetzt ist.

2. Vorrichtung zur Herstellung eines Reifens, mit einem starren, abnehmbaren Kern (2), der die Form der Innenoberfläche des Reifens festlegt, auf welchem man fortlaufend den Reifen dadurch aufbaut, daS man die verschiedenen Bestandteile in der Reihenfolge und an der Stelle aufschichtet, die durch die endgültige Bauart des genannten Reifens gefordert sind, mit einer Baugruppe (8), die das Heranholen des Fadens (4) und die Entnahme eines Fadenabschnitts (40) mit vorbestimmter Länge gestattet, und die das Einführen des Abschnitts (40) in eine Darbietevorrichtung (6) für diesen Abschnitt (40) oberhalb des Kernes (2) gestattet, dadurch **gekennzeichnet**, daß die genannte Darbietevorrichtung (40) Mittel aufweist, die den genannten Abschnitt im wesentlichen senkrecht zu einem Radius oberhalb des Kernes (2) in einem beabsichtigten Winkel in bezug auf den Kern (2) ausrichten, wobei mindestens der mittlere Teil des genannten Abschnitts (40) im wesentlichen seiner Endlage auf den Kern (2) gegenüberliegt, und daß die Vorrichtung zwei Herumlegeeinrichtungen (5 oder 7) aufweist, die beiderseits des Kernes (2) zu einer zyklischen Bewegung angeregt sind, an den Kern (2) von oberhalb dessen her anlaufen, indem sie sich in Richtung der Drehachse des Kernes (2) herabbewegen, in Berührung mit dem Fadenabschnitt (40) treten, -nachdem sie sich im Verlauf ihrer sich abwärtsbewegenden Bahnkurve an den Kern (2) angenähert haben, und den Fadenabschnitt an der gewünschten Stelle auf dem Kern (2) aufbringen.

3. Vorrichtung nach Anspruch 2, dadurch **gekennzeichnet**, daß die Darbietevorrichtung (6) mindenstens eine Zange (31, 32) aufweist, die in bezug auf den Kern (2) beweglich ist, wobei die Zange (31 oder 32) den Faden (4) nach der Heranhol- und Entnahmebaugruppe (8) ergreift und jeden Abschnitt (40) geradlinig über den Kern (2) hinweg und über diesen hinaus mitnimmt, wobei sich die Zange derart versetzt, daß der mitgenommene Abschnitt (40) in bezug auf den Kern den gewünschten Winkel bildet.

4. Vorrichtung nach Anspruch 2, dadurch **gekennzeichnet**, daß die Zangen (31, 32) auf einem Zangentrageriemen (34) angebracht sind, der in Eingriff mit zwei Riemenscheiben (35) steht, wobei der Zangentrageriemen (34) und die genannten Riemenscheiben (35) parallel zu einer Ebene ausgerichtet sind, die den gewünschten Winkel in bezug auf den Kern bildet.

5. Vorrichtung nach einem der Ansprüche 3 oder 4, dadurch **gekennzeichnet**, daß der genannte Winkel 90° beträgt.

6. Vorrichtung nach Anspruch 2, dadurch **gekennzeichnet**, daß die Darbietevorrichtung (6) von einer geradlinigen Hohlkehle gebildet ist, die senkrecht zu einem Radius angeordnet ist, der in der Mittelebene enthalten ist, welche an die Drehachse des Kernes (2) und diese geradlinige Hohlkehle anstößt, und den genannten beabsichtigten Winkel in bezug auf diese Mittelebene bildet, wobei die Hohlkehle zum Kern (2) hin offen ist.

7. Vorrichtung nach Anspruch 6 für einen Metallfaden bzw. Metalldraht (4), dadurch **gekennzeichnet**, daß die Hohlkehle auf der ihrer Öffnung zum Kern hin entgegengesetzten Seite eine magnetische geradlinige Rampe (64) aufweist, die der endgültigen Lage des Drahtes auf dem Kern gegenüberliegt, wobei jeder Abschnitt (40) des Drahtes (4) in diese Kohlkehle eingeleitet wird und an deren Boden durch magnetische Anziehung gehalten wird.

8. Vorrichtung nach einem der Ansprüche 6 oder 7, dadurch **gekennzeichnet**, daß der genannte Winkel zwischen 15° und 90° liegt.

9. Vorrichtung nach Anspruch 2, dadurch **gekennzeichnet**, daß zwei Aufnahmerollen (25) beiderseits des Kerns (2) angeordnet und in bezug auf eine Ebene zentriert sind, die die Bahnkurve eines Anordnungskopfes (3) enthält, und daß die Darbeitungsvorrichtung (6) von einem Rohrstutzen (60) gebildet ist, dessen Ende den Abschnitt (40) auf eine Aufnahmerolle (25) und vor den Anordnungskopf (3) heranbringt, der jeden Fadenabschnitt (40) aufgreift und auf dem Kern (2) sowie auf die Zwischenrollen (25) aufbringt, wobei jede Herumlegeeinrichtung (5) zwischen dem Kern und einer der Zwischenrollen (25) eingreift.

10. Vorrichtung nach einem der Ansprüche 6 bis 8, dadurch **gekennzeichnet**, daß die Herumlegeeinrichtung eine Kreisbewegung beschreibt, die die Schulterzone des künftigen Reifens tangiert.

11. Vorrichtung nach einem der Ansprüche 2 bis 5 oder 9, dadurch **gekennzeichnet**, daß die Herumlegeeinrichtung auf einem Herumlegeeinrichtungsriemen (54) angebracht ist, der auf zwei Riemenscheiben (52, 53) in Eingriff steht, von denen die eine in der Höhe der Wülste des künftigen Reifens gelegen ist und die andere radial in Höhe des Scheitels des Kernes oder darüber gelegen ist.

12. Vorrichtung nach einem der Ansprüche 10 oder 11, dadurch **gekennzeichnet**, daß die Herumlegeeinrichtung von einem Mitnehmer (50) gebildet ist, der im Sinne seiner Bewegungsrichtung senkrecht angeordnet ist.

13. Vorrichtung nach Anspruch 12, dadurch **gekennzeichnet**, daß die eine der Herumlegeeinrichtungen eine Zange (71) aufweist, die den Faden bzw. Draht aufnimmt, ihn aber seiner Länge nach durchrutschen läßt, und daß die auf diese Weise ausgestattet Herumlegeeinrichtung auf den Faden bzw. Draht nach der anderen Herumlegeeinrichtung einwirkt.

14. Vorrichtung nach einem der Ansprüche 2 bis 13, dadurch **gekennzeichnet**, daß die Zuführung des Fadens bzw. Drahtes durch zwei Rollen (80, 81) bewirkt wird, zwischen denen der Faden bzw. Draht (4) eingeklemmt ist, wobei mindestens eine der Rollen zur Drehung mit einer bekannten Winkelgeschwindigkeit derart angetrieben ist, daß die ständige Messung der herangeholten Faden- bzw. Drahtlänge ständig durchgeführt wird, wobei der Faden bzw. Draht (4) nachfolgend in eine Hülse (83) eingeführt wird, und wobei die Entnahme von einem rotierenden Messer (84) vor der genannten Hülse (83) bewirkt wird.
